# EUROPÄISCHE PATENTANMELDUNG

(11) **EP 1 375 269 A1**
(43) Veröffentlichungstag der Anmeldung: **02.01.2004**
(21) Anmeldenummer: 02014192.5
(22) Anmeldetag: 25.06.2002
(51) Int. Cl.: B60R 25/10, G08B 13/16, G01S 15/04

(54) **Akustisches Überwachungsverfahren**

(71) Anmelder: SIEMENS AKTIENGESELLSCHAFT, 80333 München (DE)
(72) Erfinder: Pörschmann, Christoph, Dr., 45966 Gladbeck (DE)

(57) **Zusammenfassung**

Die Erfindung betrifft ein Verfahren zum Feststellen eines Eingriffs in einen zu schützenden, im wesentlichen geschlossenen Raum, wie den Innenraum eines Kraftfahrzeugs, mit den Schritten:
a) Aussenden eines breitbandigen, akustischen Signals über einen in dem Raum angeordneten Lautsprecher (2),
b) Bestimmen der Raumimpulsantwort aufgrund des breitbandigen, akustischen Signals ohne äußeren Eingriff in den Raum über ein in dem Raum angeordnetes Mikrophon (1) zum Gewinnen einer Referenz-Raumimpulsantwort,
c) wiederholtes Aussenden des Signals und jeweiliges Bestimmen der Raumimpulsantwort aufgrund des breitbandigen akustischen Signals sowie Vergleichen aktuell gewonnener Raumimpulsantworten mit der Referenz-Raumimpulsantwort zum Feststellen eines Eingriffs in den Raum.

## Beschreibung

Die Erfindung bezieht sich auf ein Verfahren zum Feststellen eines Eingriffs in einem zu schützenden, im wesentlichen geschlossenen Raum, wie den Innenraum eines Kraftfahrzeugs.

Für solche Zwecke werden im Stand der Technik, insbesondere auch bei Kraftfahrzeugen, gesonderte Geräte verwendet, die eine separate Verkabelung, Stromversorgung und Sensorik benötigen. Dabei wird es als nachteilig empfunden, dass bei der Ausrüstung des Kraftfahrzeugs mit einer Alarmanlage recht umfangreiche zusätzliche Einbauten erforderlich sind.

Ausgehend hiervon liegt der Erfindung die Aufgabe zugrunde, ein Verfahren zum Feststellen eines Eingriffs in einen zu schützenden, im wesentlichen geschlossenen Raum zu schaffen, bei dem, insbesondere bei Kraftfahrzeugen, gegenüber bereits vorhandenen Bauelementen geringere Ergänzungen vorzunehmen sind, um die Alarmanlage bereitzustellen.

Diese Aufgabe wird bei dem eingangs genannten Verfahren gelöst durch die Schritte:
a) Aussenden eines breitbandigen, akustischen Signals über einen in dem Raum angeordneten Lautsprecher,
b) Bestimmen der Raumimpulsantwort aufgrund des breitbandigen, akustischen Signals ohne äußeren Eingriff in den Raum über ein in dem Raum angeordnetes Mikrophon. zum Gewinnen einer Referenz-Raumimpulsantwort,
c) wiederholtes Aussenden des Signals und jeweiliges Bestimmen der Raumimpulsantwort aufgrund des breitbandigen, akustischen Signals sowie Vergleichen aktuell gewonnener Raumimpulsantworten mit der Referenz-Raumimpulsantwort zum Feststellen eines Eingriffs in den Raum.

Ein solches Verfahren hat den Vorteil, dass es ohne weiteres in Räumen umsetzbar ist, deren Ausstattung mindestens einen Lautsprecher und mindestens ein Mikrophon aufweist. Insbesondere in Kraftfahrzeugen sind solche Komponenten häufig bereits ab Werk eingebaut, so dass sie allenfalls um platzsparend erhältliche zusätzliche Hardware zur Erzeugung des breitbandigen, akustischen Signalimpulses und zum Verarbeiten der erfassten Impulsantwort erweitert werden müssen.

Bevorzugt wird als breitbandiges, akustisches Signal ein MLS-Signal verwendet, wobei die Bezeichnung "MLS" für "Maximum Length Sequences" steht. Solche Sequenzen sind im Stand der Technik bekannt und zeichnen sich dadurch aus, dass die Raumimpulsantwort auf besonders einfache Weise durch Kreuzkorrelation des breitbandigen, akustischen Signals mit dem über das Mikrophon empfangenen Signal gewonnen werden kann.

Vorzugsweise wird in dem Schritt c) der Vergleich für einen Reflektionsanteil der Raumimpulsantwort durchgeführt. Bei räumlicher Trennung des Lautsprechers und des Mikrophons gelangt das breitbandige, akustische Signal sowohl auf direktem Wege als auch an Innenflächen des im wesentlichen geschlossenen Raumes reflektiert zu dem Mikrophon. Repräsentativ für etwaige Eingriffe in den Raum ist in erster Linie der Reflektionsanteil, da dieser Änderungen erfährt, sobald die Innen- bzw. Begrenzungsflächen des Raumes manipuliert werden. Wenn beispielsweise ein Fahrzeugfenster eingeschlagen oder eine Fahrzeugtür geöffnet wird und somit ein Eingriff in den Raum vorliegt, ändert sich der von diesen Flächen reflektierte Signalanteil, was zu einer geänderten Impulsantwort führt, die von der Referenz-Impulsantwort abweicht. Dies kann zum Anlass genommen werden, ein akustisches, optisches o.ä. Alarmsignal abzugeben.

Weitere bevorzugte Ausführungsformen des Verfahrens finden sich in den Ansprüchen 5 bis 7, die jeweils Beispiele für Verwendungen akustischer Einrichtungen zum Gegenstand haben, die üblicher Weise zur Standardausrüstung insbesondere eines Kraftfahrzeuges gehören können.

Die Erfindung wird nachfolgend anhand von Ausführungsbeispielen unter Bezugnahme auf die Zeichnungen noch näher erläutert. Es zeigen:
- Figur 1: eine schematische Darstellung eines Kraftfahrzeuges, insbesondere seines Innenraums, zur Erläuterung eines Verfahrens zum Feststellen eines Eingriffs in den Innenraum und
- Figur 2: eine Impulsantwort zwischen einem Lautsprecher und einem Mikrophon.

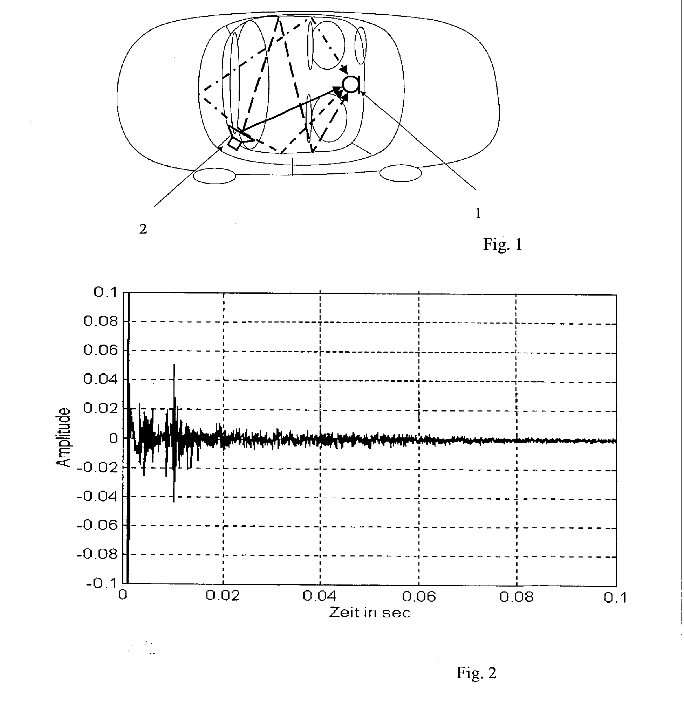

Wie aus Figur 1 hervorgeht, weist eine Vorrichtung zum Durchführen eines Verfahrens zum Feststellen eines Eingriffs in einen zu schützenden, im wesentlichen geschlossenen Raum, wie im vorliegendem Ausführungsbeispiel in den Innenraum eines Kraftfahrzeuges, ein Mikrophon 1 und in einen Lautsprecher 2, auf.

Der Lautsprecher 2 dient zum Aussenden eines breitbandigen, akustischen Signals, wobei die Raumimpulsantwort so beschaffen ist, dass sich aus ihr ein Eingriff in den Innenraum des Kraftfahrzeuges herleiten lässt. Im vorliegendem Ausführungsbeispiel handelt es sich bei dem breitbandigen, akustischen Signals um ein MLS-Signal, das sowohl direkt (durchgezogen Linie in der Figur 1) als auch an mehreren Innenflächen des Innenraums des Kraftfahrzeugs reflektiert (gestrichelte und strichpunktierte Linien in Figur 1) zu dem Mikrophon 1 gelangen kann.

In Figur 1 nicht dargestellt ist eine Erzeugungseinrichtung für das breitbandige, akustische Signal, deren Ausgang mit dem Lautsprecher 2 verbunden ist. Ebenfalls nicht dargestellt ist eine Signalverarbeitungseinrichtung, die das von dem Mikrophon 1 empfangene Signal zum Ermitteln der zugehörigen Raumimpulsantwort weiterverarbeitet. Bei Verwendung eines MLS-Signals führt die Signalverarbeitungseinrichtung eine Kreuzkorrelation des Ausgangs-MLS-Signals mit dem Empfangssignal des Mikrophons 1 durch.

Eine typische Raumimpulsantwort zwischen Lautsprecher 2 und Mikrophon 1 ist in Figur 2 dargestellt. Gegeneinander aufgetragen ist die Amplitude der Raumimpulsantwort gegen die Zeit. Zu sehr frühen Zeiten ist eine sehr hohe Amplitude festzustellen, die im wesentlichen von Direktschall zwischen dem Lautsprecher 2 und dem Mikrophon 1 herrührt. Der sich zeitlich daran anschließende Anteil der Raumimpulsantwort ist auf Reflektionen an den Innenraumflächen des Kraftfahrzeugs zurückzuführen. Der Verlauf des letztgenannten Anteils der Raumimpulsantwort hängt somit von etwaigen Eingriffen in den Innenraum des Kraftfahrzeuges ab, die zu einer Veränderung von Reflektionsflächen für den breitbandigen, akustischen Signalimpuls führen.

Zum Feststellen eines Eingriffs in den Innenraum des Kraftfahrzeugs wird zunächst der breitbandige, akustische Signalimpuls ohne Eingriff in den Innenraum des Kraftfahrzeugs ausgesandt und über das Mikrophon 1 werden direkte und reflektierte Anteile des Signals erfasst. Dies dient zum Gewinnen einer Referenz-Raumimpulsantwort mittels der Signalverarbeitungseinrichtung.

Danach kann das breitbandige, akustische Signal wiederholt ausgesandt und seine Raumimpulsantwort berechnet werden, wobei jeweils ein Vergleich zu der Referenz-Raumimpulsantwort vorgenommen wird, um Änderungen zu erfassen, die zum Auslösen eines Alarms dienen können.

Selbstverständlich können die Erzeugungseinrichtung für das MLS-Signal und die Signalverarbeitungseinrichtung zu einem Gerät zusammengefasst sein, insbesondere auch in in einem Kraftfahrzeug standardmäßig einbaubare Infotainment-Geräte integriert sein.

Beispielsweise kann das Kraftfahrzeug in seinem Innenraum mit einem Autoradio ausgestattet sein, in das das Mikrophon 1 integriert ist und das eigene Signalverarbeitungsressourcen sowie eine Erzeugungseinrichtung für das MLS-Signal aufweist. Der Lautsprecher 2 wird dann von dem Lautsprecher gebildet, der dem Autoradio zugeordnet ist. Das Autoradio kann mit einem GSM-Modul kombiniert sein, das einen automatischen Verbindungsaufbau zu einer Alarmanlage, eine Benachrichtigung des Besitzers des Kraftfahrzeugs oder auch eine Ortung des Kraftfahrzeugs ermöglichen kann.

Bei einem anderen Ausführungsbeispiel kann das Mikrophon 1 von einem Mikrophon einer Freisprecheinrichtung, mit der das Kraftfahrzeug ausgestattet ist, gebildet werden. Die Freisprecheinrichtung ist dann derart nachzurüsten, dass sie sowohl das MLS-Signal erzeugen als auch das über das Mirkophon 1 empfangene Signal zum Ermitteln der Raumimpulsantwort weiterverarbeiten kann.

Bei einem weiteren Ausführungsbeispiel ist ein Kraftfahrzeug mit einem Navigationssystem ausgestattet, dass sich über Sprachbefehle, die über ein Mikrophon erfasst werden, steuern lässt und auch über eine Sprachausgabe verfügt.

Das erläuterte Verfahren ist dazu in der Lage, jedes Öffnen einer Fahrzeugtür, eines Fahrzeugfensters über die Erfassung einer Veränderung der Impulsantwort zu detektieren. Die Durchführung des Verfahrens ist unempfindlich gegenüber äußeren Störungen in Folge sehr hoher Schallpegel in einer Umgebung des Kraftfahrzeuges. Auch wird bei dem Verfahren vermieden, dass ein Alarmsignal ausgelöst wird, wenn ein Stoß gegen das Kraftfahrzeug erfolgt, was bei Kraftfahrzeugalarmanlagen des Standes der Technik vorkommen kann.

## Patentansprüche

1. Verfahren zum Feststellen eines Eingriffs in einen zu schützenden, im wesentlichen geschlossenen Raum, wie den Innenraum eines Kraftfahrzeugs, mit den Schritten:
a) Aussenden eines breitbandigen, akustischen Signals über einen in dem Raum angeordneten Lautsprecher (2),
b) Bestimmen der Raumimpulsantwort aufgrund des breitbandigen, akustischen Signals ohne äußeren Eingriff in den Raum über ein in dem Raum angeordnetes Mikrophon
(1) zum Gewinnen einer Referenz-Raumimpulsantwort,
c) wiederholtes Aussenden des Signals und jeweiliges Bestimmen der Raumimpulsantwort aufgrund des breitbandigen akustischen Signals sowie Vergleichen aktuell gewonnener Raumimpulsantworten mit der Referenz-Raumimpulsantwort zum Feststellen eines Eingriffs in den Raum.

2. Verfahren nach Anspruch 1,
bei dem als breitbandiges, akustisches Signal ein MLS-Signal verwendet wird.

3. Verfahren nach einem der Ansprüche 1 oder 2,
bei dem in Schritt c) der Vergleich für einen Reflexionsanteil der Raumimpulsantwort durchgeführt wird.

4. Verfahren nach einem der Ansprüche 1 bis 3,
bei dem der Raum von einem Innenraum eines Kraftfahrzeugs gebildet wird.

5. Verfahren nach Anspruch 4,
bei dem eine über eigene Signalverarbeitungsressourcen verfügende Freisprecheinrichtung im Innenraum des Kraftfahrzeugs verwendet wird.

6. Verfahren nach Anspruch 4,
bei dem ein über eigene Signalverarbeitungsressourcen verfügendes Navigationssystem mit Sprachsteuerung und Sprachausgabe im Innenraum des Kraftfahrzeugs verwendet wird.

7. Verfahren nach Anspruch 4,
bei dem ein über eigene Signalverarbeitungsressourcen verfügendes Autoradio, welches mit einem GSM-Modul kombiniert ist, im Innenraum des Kraftfahrzeugs verwendet wird.
